## Europäisches Patentamt

## European Patent Office

## Office européen des brevets

(19)

(11) Veröffentlichungsnummer: **0 155 371 B1**

(12) **EUROPÄISCHE PATENTSCHRIFT**

(45) Veröffentlichungstag der Patentschrift: **07.08.91**

(51) Int. Cl.⁵: **G06F 9/22**

(21) Anmeldenummer: **84114841.4**

(22) Anmeldetag: **06.12.84**

(54) **Befehlsdecoder für ein Steuerwerk eines Prozessors.**

(30) Priorität: **19.03.84 DE 3410054**

(43) Veröffentlichungstag der Anmeldung:
**25.09.85 Patentblatt 85/39**

(45) Bekanntmachung des Hinweises auf die
Patenterteilung:
**07.08.91 Patentblatt 91/32**

(84) Benannte Vertragsstaaten:
**AT CH DE FR GB IT LI**

(56) Entgegenhaltungen:
**EP-A- 0 082 328**
**EP-A- 0 096 760**

**"ADVANCED LOW-POWER SCHOTTKY AND
ADVANCED SCHOTTKY LOGIC CIRCUITS",TI,
1983**

**"VLSI" SYSTEM DESIGN" (MUROGA), JOHN
WILEY, 1982**

(73) Patentinhaber: **Siemens Aktiengesellschaft
Wittelsbacherplatz 2
W-8000 München 2(DE)**

(72) Erfinder: **Moeller, Wolf-Dietrich, Dr. Ing.
Elise-Aulinger-Strasse 22
W-8000 München 83(DE)**
Erfinder: **Sandweg, Gerd, Dr. Ing.
Adlerstrasse 49
W-8000 München 82(DE)**
Erfinder: **Wallstab, Stefan, Dipl.-Ing.
Joerg-Strasse 23
W-8000 München 21(DE)**

## Beschreibung

Die Erfindung bezieht sich auf einen Befehlsdecoder für ein Steuerwerk eines Prozessors, der die vom Prozessor auszuführenden Befehle decodiert und daraus Steuersignale für andere Einheiten des Prozessors erzeugt.

Beim Entwurf hochintegrierter Bausteine mit Prozessorstrukturen ist im Steuerwerk der Befehlsdecoder meist eine kritische Einheit, bei deren Entwurf ein großer Teil des Zeitaufwandes auftritt. Durch eine Realisierung des Befehlsdecoders mit regelmäßigen Strukturen kann dieser Entwurfsaufwand reduziert werden und der Entwurf selber übersichtlicher und sicherer werden. Aus diesem Grunde werden bei derartigen Mikroprozessorstrukturen die Befehlsdecoder mit Hilfe von ROM's oder programmierbaren Schaltungen (PLA) realisiert.

Nachteilig bei diesen Lösungen ist der relativ hohe Flächenbedarf, wenn ein herkömmliches ROM oder eine herkömmliche programmierbare Schaltung verwendet wird. Der Flächenbedarf steigt stark mit der Zahl der Eingänge, die entsprechend der Breite des Befehlswortes, z.B. zwischen 16 und 48, liegen kann, und der Zahl der Ausgänge, für die typische Werte 100 bis 300 sind. Ein Ausweg aus diesem Problem kann die Teilung des Befehlsdecoders in mehrere kleinere programmierbare Schaltungen oder ROM's sein. Dann aber kann die Anordnung und die Verdrahtung der einzelnen ROM's oder programmierbaren Schaltungen zu einem Problem werden.

Ein Steuerwerk bei einem Prozessor mit einem Befehlsdecoder der beschriebenen Art kann z.B. aus H.G. Schwärtzel, CAD für VLSI, Springer Verlag, 1982, S. 56 bis 62 oder aus EP-A-0096 760 (IBM) entnommen werden.

Der Aufbau von PLA's ist ebenfalls bekannt und kann z.B. aus "Advanced Low-Power Schottky and Advanced Schottky Logic Circuits", Texas Instruments, 1983, ISBN 3-88078-042-0 und "VLSI SYSTEM DESIGN", Muroga S., ISBN 0-471-86090-5, John Wiley & Sons, 1982, entnommen werden.

Die der Erfindung zugrundeliegende Aufgabe besteht darin, einen Befehlsdecoder für ein Steuerwerk eines Prozessors derart aufzubauen, daß regelmäßige Strukturen verwendbar sind, aber der Aufwand für die verwendeten Schaltungen und für die Verdrahtung dieser Schaltungen nicht groß ist.

Diese Aufgabe wird gemäß den Merkmalen des Anspruchs 1 gelöst.

Zur Realisierung des Befehlsdecoders werden somit zwei Decodierungsstufen verwendet, die gleiche Struktur aufweisen, nämlich eine UND-Ebene und eine auf einer Linie reduzierte ODER-Ebene. Die Auswahl bestimmter Gruppen von Bitmustern in den Befehlsworten erfolgt in der UND-Ebene durch sog. Produktterme. Diese Produktterme werden nicht wie üblich mehrfach ausgenützt. Sie werden ggf. sogar mehrfach gebildet, um die Decodierung einzelner Befehle voneinander zu entkoppeln. Die Folge ist, daß die ODER-Ebene auf eine Linie von Verknüpfungsgliedern reduziert werden kann, die zu dem gegenüber einer programmierbaren Schaltung (PLA) gedreht werden kann und neben die UND-Ebene angeordnet werden kann. Die Folge ist ein geringerer Flächenbedarf für die erste und entsprechend auch für die zweite Decodierungsstufe.

Zur Erzeugung von Steuersignalen beliebigen zeitlichen Verlaufs können die Verknüpfungsglieder der ODER-Ebene der zweiten Decodierungsstufe mehrere dritte Leitungen, die über Verknüpfungsglieder mit verschiedenen vierten Leitungen verknüpft sind, zusammenfassen.

Der Verdrahtungsaufwand innerhalb des Prozessorbausteins kann dadurch reduziert werden, daß die Decodierungsstufen räumlich benachbart neben den Einheiten des Prozessors angeordnet sind, denen die meisten Steuersignale zugeführt werden, daß sowohl die erste als auch die zweite Decodierungsstufe in Scheiben eingeteilt ist, wobei jeder Untereinheit der anzusteuernden Einheiten jeweils eine oder mehrere Scheiben der ersten und zweiten Decodierungsstufe zugeordnet sind, und daß die Scheiben sowohl der ersten Decodierungsstufe als auch der zweiten Decodierungsstufe unabhängig von anderen Scheiben der ersten und zweiten Decodierungsstufe arbeiten.

Um einen geraden Leitungsverlauf für die Steuersignale zwischen den Decodierungsstufen und den zu steuernden Einheiten zu erreichen, ist es ggf. zweckmäßig, zwischen einzelnen Scheiben der ersten und zweiten Decodierungsstufe Leerscheiben einzufügen.

Eine einfache Struktur der beiden Decodierungsstufen wird insbesondere auch dadurch erreicht, daß den zu steuernden Einheiten möglichst scharf abgegrenzte Bitgruppen im Befehlswort zugeordnet werden und die einzelnen Bits der Befehlsworte möglichst nicht mehrfach belegt werden.

Die Erfindung hat somit folgende Vorteile:
Die einzelnen Scheiben der ersten bzw. zweiten Decodierungsstufe sind voneinander entkoppelt. Dies hat zur Folge, daß die Decodierungsstufen leicht geändert werden können und an neue zu steuernde Einheiten einfach angepaßt werden können.

Durch das Einfügen von leeren Scheiben innerhalb der beiden Decodierungsstufen wird eine schräge Verdrahtung zwischen den Decodierungsstufen und den zu steuernden Einheiten vermieden und damit der Flächenbedarf für die Verdrahtung verringert.

Damit erreicht man kurze Verbindungsleitungen zwischen den Decodierungsstufen und den zu steuernden Einheiten und geringe Laufzeiten für die Steuersignale.

Im folgenden wird die Erfindung anhand eines Ausführungsbeispiels weiter erläutert. Es zeigen

Fig. 1     ein Blockschaltbild eines Prozessors, aus dem sich ergibt, wie das Steuerwerk zu den anderen Einheiten des Prozessors angeordnet ist,

Fig. 2     ein Blockschaltbild des Befehlsdecoders bestehend aus der ersten Decodierungsstufe und der zweiten Decodierungsstufe,

Fig. 3     eine Realisierung der ersten Decodierungsstufe,

Fig. 4     eine Realisierung der zweiten Decodierungsstufe.

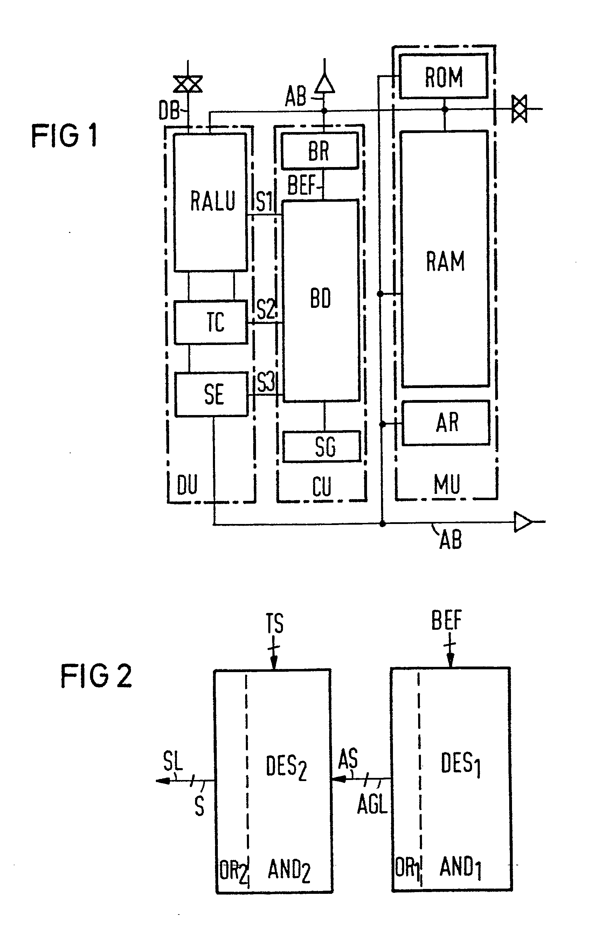

Fig. 1 zeigt ein Blockschaltbild eines Prozessors und insbesondere die Anordnung des Steuerwerks CU innerhalb des Prozessors. Neben dem Steuerwerk CU ist eine Dateneinheit DU angeordnet, in dem die Einheiten zusammengefaßt sind, die zur Bearbeitung von Daten im Prozessor erforderlich sind. Auf der anderen Seite des Steuerwerks CU liegt die Speichereinheit MU. Diese besteht im Ausführungsbeispiel aus einem RAM, einem ROM und einem Adressenregister AR. Die Dateneinheit DU enthält im Ausführungsbeispiel ein Rechenwerk RALU, einen Zeitzähler TC und einen Sequencer SE.

Mit Hilfe des Steuerwerks CU werden Befehle decodiert und entsprechend den decodierten Befehlen Steuersignale $S_1$, $S_2$, $S_3$...z.B. für die Einheiten der Dateneinheit DU erzeugt. Das Steuerwerk CU enthält zu diesem Zwecke einen Befehlsdecoder BD. Dieser erhält von einem Befehlsregister BR die zu decodierenden Befehle. Die Befehle werden entweder vom ROM oder von RAM in das Befehlsregister BR geladen. Um die taktrichtigen Steuersignale S bilden zu können, ist ein Taktgenerator SG vorgesehen, der zeitlich versetzte Taktsignale dem Befehlsdecoder BD zuführt.

Die Verbindung innerhalb der einzelnen Einheiten des Prozessors und die Verbindung mit anderen Einheiten außerhalb des Prozessors erfolgen über Busse, z.B. Datenbusse DB und Adreßbusse AB.

Im folgenden wird der Aufbau der Dateneinheit DU und der Speichereinheit MU als bekannt vorausgesetzt und nur auf die Realisierung des Steuerwerks CU näher eingegangen und hier insbesondere auf die Realisierung des Befehlsdecoders BD.

Aus Fig. 2 ergibt sich, daß der Befehlsdecoder BD zweistufig aufgebaut ist. Er besteht aus einer ersten Decodierungsstufe $DES_1$ und einer zweiten Decodierungsstufe $DES_2$. Der ersten Decodierungsstufe $DES_1$ werden die Befehle BEF zugeführt. Die Breite der Befehle BEF kann z.B. 32 bit sein. Die erste Decodierungsstufe $DES_1$ decodiert

die Befehle BEF und erzeugt auf Ausgangsleitungen AGL Ausgangssignale AS, die allerdings noch nicht taktrichtig auftreten. Die Anzahl der Ausgangsleitungen kann z. B. 300 sein.

In der zweiten Decodierungsstufe $DES_2$ werden die Ausgangssignale AS mit Taktsignalen TS so verknüpft, daß die Steuersignale S am Ausgang der zweiten Decodierungsstufe $DES_2$ zeitrichtig auftreten. Um dies zu erreichen, können z.B. 10 zeitlich versetzt auftretende Taktsignale TS der zweiten Decodierungsstufe $DES_2$ zugeführt werden. Die Anzahl der am Ausgang der zweiten Decodierungsstufe $DES_2$ auf Steuerleitungen SL auftretenden Steuersignale S kann z.B. 230 betragen.

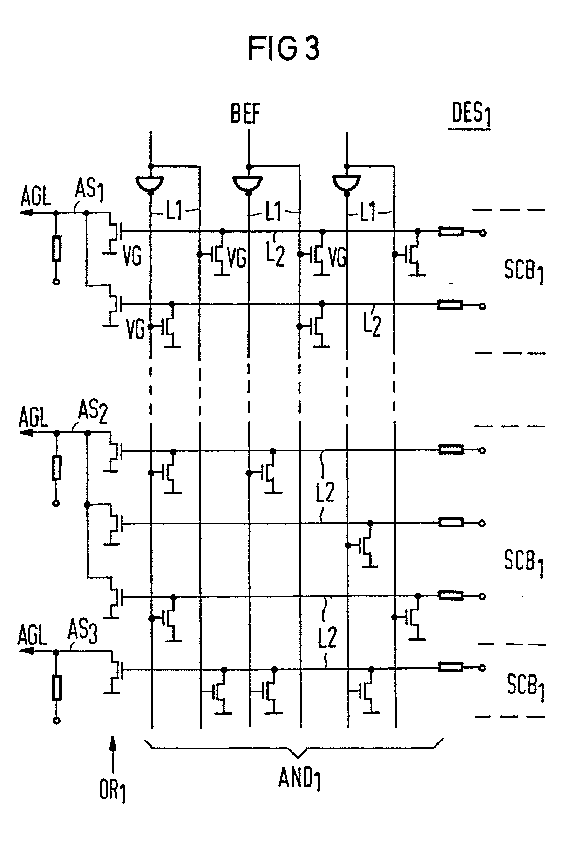

Die Realisierung der ersten Decodierungsstufe $DES_1$ ergibt sich aus Fig. 3. Diese besteht aus zwei Bestandteilen einer UND-Ebene $AND_1$ und einer ODER-Ebene $OR_1$.

Die UND-Ebene ist wie bei einer programmierbaren Schaltung aufgebaut und besteht aus sich kreuzenden ersten Leitungen $L_1$ und zweiten Leitungen $L_2$. Entsprechend der gewünschten Programmierung ist an den Kreuzungspunkten der UND-Ebene $AND_1$ jeweils ein Verknüpfungsglied VG angeordnet. Der Aufbau und die Funktion einer derartigen UND-Ebene ist bekannt und braucht daher hier nicht weiter erläutert zu werden.

Die einzelnen Bits der Befehle BEF können entweder invertiert oder nicht invertiert innerhalb der UND-Ebene $AND_1$ verwendet werden, um bei einem entsprechenden Bitmuster im Befehlswort auf einer der zweiten Leitungen $L_2$ ein Signal zu erzeugen. Dieses Signal liegt solange auf dieser Leitung $L_2$, solange das Befehlswort BEF anliegt.

Die ODER-Ebene $OR_1$ besteht nach Fig. 3 aus einer Linie von Verknüpfungsgliedern VG. Jede zweite Leitung $L_2$ ist jeweils nur mit einem Verknüpfungsglied VG der ODER-Ebene verbunden (keine Mehrfachausnutzung von Produkttermen). Mit Hilfe der ODER-Ebene $OR_1$ können mehrere zweite Leitungen $L_2$ zu einer Ausgangsleitung AS verknüpft werden.

Da einer zu steuernden Einheit ganz bestimmte Bits innerhalb des Befehls zugeordnet sind, ist es möglich, die erste Decodierungsschaltung $DES_1$ in Scheiben $SCB_1$ aufzuteilen. In Fig. 3 sind drei derartige Scheiben $SCB_1$ dargestellt. Eine solche Scheibe $SCB_1$ ist somit einer bestimmten zu steuernden Einheit oder zu steuernden Untereinheit zugeordnet und decodiert aus dem Befehl BEF die Untergruppe, durch die diese Einheit oder Untereinheit gesteuert wird. Durch diese Zuordnung von Bitgruppen des Befehls BEF zu zu steuernden Einheiten wird erreicht, daß die einzelnen Scheiben $SCB_1$ der Decodierungsschaltung $DES_1$ unabhängig voneinander sind, wodurch Änderungen wesentlich erleichtert werden.

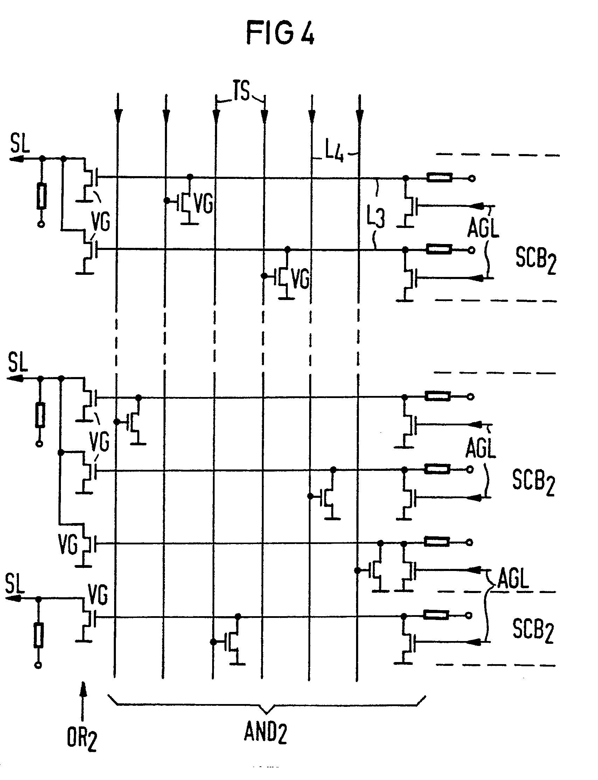

Auf den Ausgangsleitungen AGL treten die Ausgangssignale AS auf, die in der zweiten Decodierungsstufe DES$_2$ weiter bearbeitet werden. Diese zweite Decodierungsstufe DES$_2$, die in Fig. 4 gezeigt ist, besteht ebenfalls aus einer UND-Ebene AND$_2$ und einer ODER-Ebene OR$_2$. Die UND-Ebene AND$_2$ ist aus sich kreuzenden dritten Leitungen L$_3$ und vierten Leitungen L$_4$ aufgebaut, an deren Kreuzungspunkte Verknüpfungsglieder VG angeordnet werden können. Den vierten Leitungen L$_4$ werden die Taktsignale TS zugeführt, die dritten Leitungen L$_3$ sind mit Ausgangsleitungen AGL von der ersten Decodierungsstufe DES$_1$ verknüpft. Je nachdem, an welchen Kreuzungspunkten der UND-Ebene AND$_2$ Verknüpfungsglieder VG angeordnet sind, werden die Ausgangssignale AS der ersten Decodierungsstufe mit den entsprechenden Taktsignalen verknüpft.

Diese nunmehr taktrichtigen Signale werden mit Hilfe der Verknüpfungsglieder VG der ODER-Ebene OR$_2$ auf die Steuerleitungen SL als Steuersignale übertragen und den zu steuernden Einheiten zugeführt. Durch entsprechende Verknüpfung zwischen den Signalen TS und den Signalen auf den Leitungen L$_3$ der UND-Ebene AND$_2$ sowie durch entsprechende Zusammenfassung dieser Signale durch die ODER-Ebene OR$_2$ können Steuersignale S auf den Steuerleitungen SL mit beliebiger Impulsform erzeugt werden. Zum Beispiel könnten mehrere Leitungen L$_3$ mit verschiedenen Leitungen L$_4$ verknüpft werden und über die ODER-Ebene OR$_2$ zu einer Steuerleitung SL zusammengefaßt werden und dadurch ein Impulszug gewünschter Form erzeugt werden.

Aus Fig. 4 ergibt sich, daß auch die zweite Decodierungsstufe DES$_2$ in Scheiben aufgeteilt ist. Diese Scheiben sind mit SCB$_2$ bezeichnet. Auch bei der zweiten Decodierungsstufe DES$_2$ arbeiten die einzelnen Scheiben SCB$_2$ unabhängig voneinander, so daß es möglich ist, einzelne SCB$_2$ hinzuzufügen oder wegzunehmen, ohne daß die Funktion der übrigen Scheiben SCB$_2$ dadurch beeinflußt würde. Deshalb ist es auch möglich, Leerscheiben einzufügen, um eine gewünschte gerade Verdrahtung der Steuerleitungen SL zu den zu steuernden Einheiten zu erreichen.

Aus Fig. 3 und Fig. 4 ergibt sich, daß durch die zweite Decodierungsstufe DES$_2$ mehrere Scheiben SCB$_1$ der ersten Decodierungsstufe DES$_1$ verknüpft werden können. Die Gestaltung der ersten oder zweiten Decodierungsstufe DES$_1$ und DES$_2$ hängt davon ab, durch wieviele Bitkombinationen des Befehlswortes eine Einheit gesteuert wird und zu welchen Zeitpunkten die den Bitkombinationen zugeordneten Steuersignale auftreten sollen. Durch entsprechende Gestaltung der ersten Decodierungsschaltung und der zweiten Decodierungsschaltung können die gewünschten Steuersignale auf einfache Weise erzeugt werden.

**Patentansprüche**

1. Befehlsdecoder für ein Steuerwerk eines Prozessors, der die vom Prozessor auszuführenden Befehle decodiert und daraus Steuersignale für andere Einheiten des Prozessors erzeugt, mit:

a) einer ersten Decodierungsstufe (DES$_1$), die

a1) eine UND-Ebene (AND$_1$) aufweist, die aus sich kreuzenden ersten Leitungen (L$_1$) und zweiten Leitungen (L$_2$) und aus an den Kreuzungspunkten agerordneten Verknüpfungsgliedern (VG) aufgebaut ist, deren ersten Leitungen (L$_1$) die Befehle zugeführt werden und bei der entsprechend den Befehlen eine Verknüpfung von den ersten Leitungen (L$_1$) zu den zweiten Leitungen (l$_2$) vorliegt,

a2) eine ODER-Ebene (OR$_1$) aufweist mit jeweils einem Verknüpfungsglied (VG) pro zweiter Leitung (L$_2$) der UND-Ebene (AND$_1$), das nur mit einer einzigen zweiten Leitung (L$_2$) verbunden ist und das das Produkttermensignal der zugeordneten zweiten Leitung als Ausgangssignal (AS) weiterleitet, wobei mehrere Ausgangssignale (AS) miteinander verknüpft einer Ausgangsleitung (AGL) zuführbar sind,

b) einer zweiten Decodierungsstufe (DES$_2$), die

b1) eine UND-Ebene (AND$_2$) aufweist, die aus sich kreuzenden dritten Leitungen (L$_3$) und vierten Leitungen (L$_4$) und an den Kreuzungspunkten angeordneten Verknüpfungsgliedern (VG) aufgebaut ist, deren dritte Leitungen (L$_3$) jeweils mit Ausgangsleitungen (AGL) der ersten Decodierungsstufe (DES$_1$) verbunden sind, deren vierten Leitungen (L$_4$) zeitlich zueinander versetzte Taktsignale (TS) zugeführt werden, und bei der zur zeitlichen Festlegung eines jeden Ausgangssignals (AS) die vierte Leitung (L$_4$), auf der das Taktsignal zum gewünschten Zeitpunkt auftritt, mit der diesem Ausgangssignal zugeordneten dritten Leitung (L$_3$) verknüpft ist,

b2) eine ODER-Ebene (OR$_2$) aufweist mit jeweils einem Verknüpfungsglied (VG) pro dritter Leitung (L$_3$) der UND-Ebene (AND$_2$), das nur mit einer einzigen dritten Leitung verbunden ist und welches das Signal auf der zugeordneten dritten Leitung (L$_3$) zu einer Leitung (SL) für ein Steuersignal weiterleitet, wobei mehrere Verknüpfungsglieder mit einer Leitung (SL) für Steuersignale verbindbar sind, und

c) wobei die Verknüpfungsglieder (VG) jeder ODER-Ebene (OR) benachbart der zugeordneten UND-Ebene (AND) in einer Linie liegen, die parallel zu den ersten Leitungen ($L_1$) bzw. vierten Leitungen ($L_4$) verläuft.

2. Befehlsdecoder nach Anspruch 1, dadurch **gekennzeichnet**, daß die Verknüpfungsglieder (VG) der ODER-Ebene ($OR_2$) der zweiten Decodierungsstufe ($DES_2$) mehrere dritte Leitungen ($L_3$), die über Verknüpfungsglieder (VG) mit verschiedenen vierten Leitungen ($L_4$) verknüpft sind, zusammenfassen.

3. Befehlsdecoder nach Anspruch 1, dadurch **gekennzeichnet**, daß eine dritte Leitung ($L_3$) über jeweils ein Verknüpfungsglied (VG) mit mehreren vierten Leitungen ($L_4$) verbunden ist.

4. Befehlsdecoder nach einem der vorhergehenden Ansprüche, dadurch **gekennzeichnet**, daß die Decodierungsstufen ($DES_1$, $DES_2$) räumlich benachbart neben den Einheiten des Prozessors angeordnet sind, denen die meisten Steuersignale (S) zugeführt werden, daß sowohl die erste als auch die zweite Decodierungsstufe in Scheiben ($SCB_1$, $SCB_2$) eingeteilt ist, wobei jeder Einheit oder Untereinheit einer zu steuernden Einheit jeweils eine oder mehrere Scheiben der ersten Decodierungsstufe ($DES_1$) und der zweiten Decodierungsstufe ($DES_2$) zugeordnet sind, und daß die Scheiben sowohl der ersten als auch der zweiten Decodierungsstufe unabhängig von anderen Scheiben der ersten und zweiten Decodierungsstufe arbeiten.

5. Befehlsdecoder nach Anspruch 4, dadurch **gekennzeichnet,**
daß zur Erlangung eines geraden Leitungsverlaufs für die Steuersignale (S) zwischen der zweiten Decodierungsstufe ($DES_2$) und der zu steuernden Einheit erforderlichenfalls zwischen einzelnen Scheiben der ersten Decodierungsstufe ($DES_1$) und der zweiten Decodierungsstufe ($DES_2$) jeweils keine verwendete Schaltkreise aufweisende Leerscheiben eingefügt sind.

## Claims

1. Instruction decoder for a processor control unit, which decodes the instructions to be executed by the processor and generates from these control signals for other units of the processor, comprising:

a) a first decoding stage ($DES_1$) which
a1) exhibits an AND plane ($AND_1$) which is built up of intersecting first lines ($L_1$) and second lines ($L_2$) and of logic elements (VG) arranged at the points of intersection, the first lines ($L_1$) of which are supplied with the instructions and in which a logic combination from the first lines ($L_1$) to the second lines ($L_2$) exists in accordance with the instructions,
a2) exhibits an OR plane ($OR_1$) having in each case one logic element (VG) per second line ($L_2$) of the AND plane ($AND_1$), which element is only connected to a single second line ($L_2$) and which forwards the product term signal of the associated second line as output signal (AS), in connection with which a plurality of output signals (AS) logically combined with one another can be supplied to an output line (AGL),

b) a second decoding stage ($DES_2$) which
b1) exhibits an AND plane ($AND_2$) which is built up of intersecting third lines ($L_3$) and fourth lines ($L_4$) and logic elements (VG) arranged at the points of intersection, the third lines ($L_3$) of which are in each case connected to output lines (AGL) of the first decoding stage ($DES_1$), the fourth lines ($L_4$) of which are supplied with clock signals (TS) which are offset with respect to one another in time, and in which the fourth line ($L_4$), on which the clock signal occurs at the desired line (L4), is logically combined, for defining each output signal in time, with the third line ($L_3$) associated with this output signal,
b2) exhibits an OR plane ($OR_2$) having in each case one logic element (VG) per third line ($L_3$) of the AND plane ($AND_2$), which element is only connected to a single third line and which forwards the signal on the associated third line ($L_3$) to a line (SL) for a control signal, in which arrangement a plurality of logic elements can be connected to a line (SL) for control signals,
c) in which arrangement the logic elements (VG) of each OR plane (OR) are located adjacent to the associated AND plane (AND) in a line which extends parallel to the first lines ($L_1$) and fourth lines ($L_4$), respectively.

2. Instruction decoder according to Claim 1, characterised in that the logic elements (VG) of the OR plane ($OR_2$) of the second decoding stage ($DES_2$) combine a plurality of third lines (L₃) which are logically combined to various fourth lines (L₄) via logic elements (VG).

3. Instruction decoder according to Claim 1, characterised in that a third line (L₃) is connected to a plurality of fourth lines (L₄) via in each case one logic element (VG).

4. Instruction decoder according to one of the preceding claims, characterised in that the decoding stages (DES₁, DES₂) are spatially adjacently arranged next to the units of the processor which are supplied with most of the control signals (S), in that both the first and the second decoding stage is divided into slices (SCB₁, SCB₂), in each case one or more slices of the first decoding stage (DES₁) and of the second decoding stage (DES₂) being allocated to each unit or subunit of a unit to be controlled, and in that these slices both of the first and the second decoding stage operate independently of other slices of the first and second decoding stage.

5. Instruction decoder according to Claim 4, characterised in that, in order to obtain a straight line run for the control signals (S) between the second decoding stage (DES₂) and the unit to be controlled, if necessary, no dummy slices exhibiting used circuits are in each case inserted between individual slices of the first decoding stage (DES₁) and the second decoding stage (DES₂).

**Revendications**

1. Décodeur d'instructions pour une unité de commande d'un processeur, qui décode les instructions devant être exécutées par le processeur et produit, à partir de celles-ci, des signaux de commande pour d'autres unités du processeur, comportant :

 a) un premier étage de décodage (DES₁), qui

  a1) possède un plan ET (AND₁), qui est constitué par des premiers conducteurs (L₁) et des seconds conducteurs (L₂), et par des circuits combinatoires (VG) disposés au niveau des points d'intersection qui se croisent, et aux premiers conducteurs (L₁) duquel sont envoyées les instructions et dans lequel une combinaison des premiers conducteurs (L₁) avec les seconds conducteurs (L₂) est présenté en fonction des instructions, et

  a2) un plan OU, (OR₁), comportant, pour chaque second conducteur (L₂) du plan ET, (AND₁), respectivement un circuit combinatoire (VG), qui est raccordé uniquement à un seul second conducteur (L₂) et retransmet le signal du terme du produit du second conducteur associé en tant que signal de sortie (AS), plusieurs signaux de sortie (AS) pouvant être envoyés, en étant combinés entre eux, à un conducteur de sortie (AGL),

 b) un second étage de décodage (DES₂), qui

  b1) possède un plan ET, (AND₂), qui est constitué par des troisièmes conducteurs (L₃) et des quatrièmes conducteurs (L₄), qui se croisent, et par des circuits combinatoires (VG) disposés au niveau des points d'intersection, et dont les troisièmes conducteurs (L₃) sont raccordés respectivement à des conducteurs de sortie (AG2) du premier étage de décodage (DES₁), et aux quatrièmes conducteurs (L₄) auxquels sont envoyés des signaux de cadence (TS) décalés dans le temps les uns par rapport aux autres, et dans lequel, pour la détermination, dans le temps, de chaque signal de sortie (AS), le quatrième conducteur (L₄), dans lequel le signal de cadence apparaît à l'instant désiré, est combiné au troisième conducteur (L₃) associé à ce signal de sortie,

  b2) un plan OU, (OR₂), comportant, pour chaque troisième conducteur (L₃) du plan ET, (AND₂), respectivement un circuit combinatoire (VG), qui est relié uniquement à un troisième conducteur unique et qui transmet le signal présent dans le troisième conducteur associé (L₃) à un conducteur (SL) pour un signal de commande, plusieurs circuits combinatoires pouvant être réunis à un conducteur (SL) pour des signaux de commande, et

 c) les circuits combinatoires (VG) de chaque plan OU (OR) étant situés au voisinage du plan ET (AND) associé, dans une ligne qui s'étend parallèlement aux premiers conducteurs (L₁) et aux quatrièmes conducteurs (L₄).

2. Décodeur d'instructions suivant la revendication 1, caractérisé par le fait que les circuits combinatoires (VG) du plan OU, (OR₂) du second étage de décodage (DES₂) réunissent plusieurs troisièmes conducteurs (L₃), qui sont combinés, au moyen de circuits combinatoires (VG), à différents quatrièmes conducteurs (L₄).

3. Décodeur d'instructions suivant la revendication 1, caractérisé par le fait qu'un troisième

conducteur (L$_3$) est raccordé par l'intermédiaire d'un circuit combinatoire respectif (VG) à plusieurs quatrièmes conducteurs (L$_4$).

4. Décodeur d'instructions suivant l'une des revendications précédentes, caractérisé par le fait que les étages de décodage (DES$_1$,DES$_2$) sont voisins dans l'espace à côté des unités du processeur, auxquelles sont envoyés la plupart des signaux de commande (S), qu'aussi bien le premier étage de décodage que le second étage de décodage sont subdivisés en sections (SCB$_1$,SCB$_2$), auquel cas à chaque unité ou sous-unité d'unités devant être commandées sont associés respectivement une ou plusieurs sections du premier étage de décodage (DES$_1$) et du second étage de décodage (DES$_2$), et que les sections aussi bien du premier que du second étage de décodage opèrent indépendamment d'autres sections des premier et second étages de décodage.

5. Décodeur d'instructions suivant la revendication 4, caractérisé par le fait que pour obtenir un parcours rectiligne de transmission des signaux de commande (S) entre le second étage de décodage (DES$_2$) et l'unité devant être commandée, respectivement des sections vides ne comportant aucun circuit utilisé, sont insérées entre des sections individuelles du premier étage de décodage (DES$_1$) et le second étage de décodage (DES$_2$).

FIG 1

FIG 2

# FIG 3

EP 0 155 371 B1

FIG 4